Europäisches Patentamt

European Patent Office

Office européen des brevets

(19)

(11)  **EP 1 317 491 B1**

(12)  **EUROPÄISCHE PATENTSCHRIFT**

(45) Veröffentlichungstag und Bekanntmachung des Hinweises auf die Patenterteilung:
**01.12.2004   Patentblatt 2004/49**

(21) Anmeldenummer: **01967331.8**

(22) Anmeldetag: **11.09.2001**

(51) Int Cl.$^7$: **C08F 8/00**, C08C 19/00

(86) Internationale Anmeldenummer:
**PCT/EP2001/010500**

(87) Internationale Veröffentlichungsnummer:
**WO 2002/022696 (21.03.2002 Gazette 2002/12)**

(54) **VERFAHREN ZUR KONTINUIERLICHEN HYDROFORMYLIERUNG VON POLYALKENEN MIT 30 BIS 700 KOHLENSTOFFATOMEN**

METHOD FOR THE CONTINUOUS HYDROFORMYLATION OF POLYALKENES HAVING 30 TO 700 CARBON ATOMS

PROCEDE POUR L'HYDROFORMYLATION CONTINUE DE POLYALCENES AYANT 30 A 700 ATOMES DE CARBONE

(84) Benannte Vertragsstaaten:
**AT BE CH CY DE DK ES FI FR GB GR IE IT LI LU MC NL PT SE TR**

(30) Priorität: **12.09.2000   DE 10045056**

(43) Veröffentlichungstag der Anmeldung:
**11.06.2003   Patentblatt 2003/24**

(73) Patentinhaber: **BASF AKTIENGESELLSCHAFT 67056 Ludwigshafen (DE)**

(72) Erfinder:
• **RÖPER, Michael 67157 Wachenheim (DE)**
• **BLANKERTZ, Heinrich-Josef 67147 Forst (DE)**
• **GRENACHER, Armin, Volker 67112 Mutterstadt (DE)**
• **KROKOSZINSKI, Roland 67273 Weisenheim a. Berg (DE)**
• **SCHÖNMANN, Willi 67117 Limburgerhof (DE)**

(74) Vertreter: **Pohl, Michael, Dr. et al Reitstötter, Kinzebach & Partner (GbR), Patentanwälte, Ludwigsplatz 4 67059 Ludwigshafen (DE)**

(56) Entgegenhaltungen:
**EP-A- 0 810 236         WO-A-98/12235
DE-A- 4 408 950**

**Beschreibung**

Die vorliegende Erfindung betrifft ein Verfahren zur kontinuierlichen Hydroformylierung von im Wesentlichen einfach ungesättigten Polyalkenen mit 30 bis 700 Kohlenstoffatomen.

Polybutenylamine sind begehrte Kraftstoff- und Schmierstoffadditive. Ihre Herstellung gelingt vorteilhaft durch Hydroformylierung von Polybuten oder Polyisobuten und anschließende Mannich-Reaktion oder hydrierende Aminierung des Oxoprodukts.

Die EP 244 616 beschreibt ein Verfahren zur Herstellung von Polybutyl- und Polyisobutylaminen und veranschaulicht eine diskontinuierliche Hydroformylierung von Polybuten unter Verwendung von Kobaltoctacarbonyl im Labormaßstab.

Die WO 90/05711 betrifft ein 1-Hydroxymethylpolyolefin, das durch Hydroformylierung eines Polyolefins erhältlich ist. In einem Beispiel wird die diskontinuierliche Hydroformylierung von Polybuten unter Verwendung eines Kobaltcarbonylkatalysators im Labormaßstab veranschaulicht.

M. Di Serio et al., J. Mol. Catal. 69 (1991) 1-14 beschreiben kinetische Untersuchungen zur Hydroformylierung von Polyisobuten. Die Hydroformylierungsversuche wurden diskontinuierlich unter Verwendung von Kobaltacetylacetonat durchgeführt.

Die WO 95/24431 beschreibt Polyolefine mit terminalen Aldehyd- oder Hydroxylsubstituenten und Derivate davon, z. B. Alkylaminoderivate. Letztere sind durch Aminomethylierung oder Hydroformylierung und reduktive Aminierung zugänglich. Es wird eine diskontinuierliche Hydroformylierung eines Ethylen-propylendicyclopentadien-Terpolymers unter Verwendung von $Co_2(CO)_8$ im Labormaßstab veranschaulicht.

Für eine wirtschaftliche großtechnische Herstellung von Oxoprodukten der Polyalkylene ist ein kontinuierliches Hydroformylierungsverfahren wünschenswert. Hierzu ist es erforderlich, den Kobaltkatalysator von den Hydroformylierungsprodukten abzutrennen und - gegebenenfalls nach chemischer Umwandlung - in die Hydroformylierungsreaktion zurückzuführen. Besonders zweckmäßig erfolgt die Abtrennung des homogen in den Hydroformylierungsprodukten gelösten Katalysators durch dessen Heterogenisierung, indem dieser z. B. in eine wasserlösliche Form umgewandelt und in eine wässrige Phase extrahiert wird. Die wasserlösliche Form wird dann wieder zurück in den aktiven Katalysator umgewandelt.

Ein derartiges kontinuierliches Verfahren ist in der WO 98/12235 offenbart. Dabei werden eine Polyisobuten enthaltende organische Phase und eine saure wässrige Kobaltformiatlösung gleichzeitig in einen Hydroformylierungsreaktor geleitet. Nach der Reaktion wird der Reaktionsaustrag entspannt und der Kobaltkatalysator durch Extraktion mit einer wässrigen sauren Lösung in Gegenwart von Luftsauerstoff sowie eines polymeren Emulsionsspalters zurückgewonnen. Bei dem in der WO 98/12235 beschriebenen Verfahren erfolgen die in situ-Bildung des Kobaltkatalysators, die Extraktion des Kobaltkatalysators in die organische Phase und die Hydroformylierung des Polyalkylens in einem Schritt in der Reaktionszone unter Hydroformylierungsbedingungen.

Es hat sich gezeigt, dass die Selektivität des bekannten Verfahrens bezüglich der Wertprodukte Polyalkylenaldehyd, -alkohol und/oder -ester bei gegebener Reaktorbelastung bzw. die zulässige Reaktorbelastung ohne Selektivitätseinbuße verbesserungswürdig sind.

Überraschenderweise wurde nun gefunden, dass bei der kontinuierlichen Hydroformylierung von Polyalkylenen eine hohe Raum-Zeit-Ausbeute bei hoher Wertproduktselektivität erzielt wird, wenn die Katalysatorbildung vorab, d. h. außerhalb der Hydroformylierungszone, erfolgt.

Dieser Befund ist überraschend, da davon auszugehen ist, dass unter den Bedingungen der Hydroformylierung von Polyalkylenen die in situ-Bildung des Katalysators ausreichend rasch verläuft und angesichts der im Vergleich zu niedermolekularen Olefinen relativ geringen Doppelbindungskonzentration in den Polyalkylenen ein ausreichendes Katalysatorangebot in der Hydroformylierungszone vorliegt. Offensichtlich werden aber bei der in situ-Katalysatorbildung intermediär niedervalente Kobaltverbindungen gebildet, die eine katalytische Aktivität unerwünschter Selektivität aufweisen und z. B. die Hydrierung der Polyalkylene gegenüber der 1-Hydro-2-carboaddition (Hydroformylierung) begünstigen.

Die DE-OS 2139630 beschreibt ein Verfahren zur Herstellung von vorwiegend geradkettigen Aldehyden durch Hydroformylierung von olefinisch ungesättigten Verbindungen mit 2 bis 20 Kohlenstoffatomen, wobei in einer ersten Stufe wässrige Kobaltsalzlösungen mit Kohlenmonoxid und Wasserstoff behandelt werden, die wässrige Lösung dann in einer zweiten Stufe mit einer organischen Phase extrahiert wird und die organische Phase und ein Gemisch aus Kohlenmonoxid und Wasserstoff in eine dritte Stufe überführt werden, wo - gegebenenfalls nach Zuführung der olefinisch ungesättigten Verbindungen, falls diese nicht oder nur teilweise zur Extraktion in der zweiten Stufe verwendet wurden - die Hydroformylierung erfolgt. Es lag fern, dieses Verfahren auf die Hydroformylierung von Polyalkylenen zu übertragen, da die DE 2139630 ausdrücklich auf lineare Aldehyde abstellt, Polyalkylene (und die daraus erhaltenen Aldehyde) jedoch stets mäßig bis stark verzweigt sind.

Die Erfindung betrifft ein Verfahren zur kontinuierlichen Hydroformylierung von im Wesentlichen einfach ungesättigten Polyalkylenen mit 30 bis 700 Kohlenstoffatomen, bei dem man

    i) in Abwesenheit der Polyalkylene aus einem in einer wässrigen Phase gelösten Katalysatorvorläufer

einen hydroformylierungsaktiven Kobaltcarbonylkatalysator herstellt,

ii) in einer Reaktionszone die Polyalkylene in Gegenwart des Kobaltcarbonylkatalysators mit Synthesegas hydroformyliert,

iii) aus dem Austrag aus der Reaktionszone den Kobaltcarbonylkatalysator unter zumindest teilweiser Rückbildung des Katalysatorvorläufers abtrennt und den Katalysatorvorläufer in Schritt i) zurückführt.

Als Polyalkylene kommen solche mit 30 bis 700 Kohlenstoffatomen, insbesondere solche mit 40 bis 400 Kohlenstoffatomen in Betracht. Die Polyalkylene sind vorzugsweise oligo- oder Polymere von $C_2$-$C_6$-Alkenen, insbesondere $C_3$-$C_6$-Alken, insbesondere $C_3$-$C_4$-Alkenen, wobei die oligomere oder Polymere im Wesentlichen einfach olefinisch ungesättigt sind. Insbesondere kommen Polymere des Butens oder Isobutens in Betracht, insbesondere solche, die wenigstens 50 % endständige Doppelbindungen in Form von Vinyl- oder Vinylidengruppen enthalten. Geeignete Polyisobutene sind z. B. in der DE-A 27 02 604 oder der US-A-5,286,823 offenbart.

Als Katalysatorvorläufer kommen insbesondere wasserlösliche Kobalt(II)-salze und Salze des Kobalttetracarbonylanions in Betracht.

Geeignete Kobalt(II)-salze sind insbesondere Kobalt(II)-carboxylate, wie Kobaltformiat, Kobaltacetat oder Kobaltethylhexanoat, oder auch Kobaltacetylacetonat. Aus einer wässrigen Kobalt(II)-salzlösung kann durch Umsetzung mit Synthesegas der hydroformylierungsaktive Kobaltcarbonylkatalysator hergestellt werden.

Die Umwandlung des $Co^{2+}$ aus der wässrigen Kobalt(II)-salzlösung in einen hydroformylierungsaktiven Kobaltcarbonylkatalysator, d. h. Kobaltcarbonylwasserstoff, erfolgt gemäß der Reaktionsgleichung:

$$2Co^{2+} + 8CO + 3H_2 \rightarrow 2HCo(CO)_4 + 4H^+$$

Aus der Gleichung folgt, dass die Katalysatorherstellung ein Synthesegas erfordert, das CO und $H_2$ im Verhältnis 8:3 enthält. Da aber eine höhere Konzentration von $H_2$ keinen nachteiligen Einfluss auf die Reaktion hat, ist es zweckmäßig, die Katalysatorherstellung aus der wässrigen Kobalt(II)-salzlösung mit dem gleichen Synthesegas durchzuführen, wie es auch für die Hydroformylierungsreaktion eingesetzt wird, um nicht verschiedene Gasströme handhaben zu müssen. Die wässrige Kobalt(II)-salzlösung wird im Allgemeinen bei Temperaturen von 50 bis 150 °C, vorzugsweise 80 bis 120 °C, und einem Druck von 50 bis 400 bar, vorzugsweise 200 bis 30.0 bar, mit Synthesegas behandelt. Das Synthesegas kann 10 bis 90 % CO und 90 bis 10 % $H_2$, vorzugsweise 30 bis 70 % CO und 70 bis 30 % $H_2$ enthalten. Die wässrige Kobalt(II)-salzlösung wird vorzugsweise auf einen pB-Wert von etwa 2 bis 5, vorzugsweise 3 bis 4, eingestellt. Zur Einstellung des pH-Werts sind z. B. Ameisensäure oder Essigsäure geeignet. Die Kobaltkonzentration in der wässrigen Lösung beträgt in der Regel 0,5 bis 2 Gew.-%, vorzugsweise 1,1 bis 1,7 Gew.-%.

Für die Umsetzung der Kobalt(II)-salzlösung mit dem Synthesegas eignen sich übliche Apparate für Gas-flüssig-Reaktionen, wie Rührbehälter mit Begasungsrührer, Blasensäulen oder Rieselbettkolonnen. Für das Rieselbett kommen Formkörper aus z. B. Stahl, Glas, Aluminiumoxid, Siliciumdioxid, Steatit, sauren Ionenaustauschern oder Aktivkohle sowie auf Aktivkohle abgeschiedene Edelmetalle, wie Palladium, in Betracht. Es kann in bestimmten Fällen günstig sein, bei der Katalysatorherstellung eine bestimmte Menge einer organischen Phase, z. B. rohes Hydroformylierungsprodukt, mitzuverwenden. Z. B. kann man die organische Phase mit der Kobalt(II)-salzlösung über das Rieselbett leiten Da der Kobaltcarbonylkatalysator eine geringe Löslichkeit in Wasser, aber eine hohe Löslichkeit in organischen Medien aufweist, können so unerwünschte Kobaltabscheidungen vermieden werden. In der Regel ist es jedoch bevorzugt, wenn die Katalysatorherstellung in Abwesenheit jeglicher organischer Phase erfolgt.

Man erhält so eine mit dem Kobaltcarbonylkatalysator beladene wässrige Lösung, die entweder als solche in die Reaktionszone geführt wird oder aus der der Katalysator abgetrennt und als Gasphase oder organische Flüssigphase in die Reaktionszone geführt wird, wie dies weiter unten erläutert ist.

Zur Abtrennung des Kobaltcarbonylkatalysators und Rückbildung von Kobalt(II)-salzen wird der Austrag aus der Reaktionszone geeigneterweise in Gegenwart einer wässrigen Phase mit Sauerstoff oder Luft behandelt. Dabei wird der Kobaltcarbonylkatalysator oxidativ zerstört und das Kobaltatom formal von der Oxidationsstufe -1 nach +2 überführt und kann sodann durch Extraktion mit der wässrigen Phase entfernt werden. Dieser Schritt wird auch "oxidative Entkobaltung" bezeichnet und wird weiter unten im Zusammenhang mit einer bevorzugten Ausführungsform des erfindungsgemäßen Verfahrens näher erläutert.

Alternativ kann man den Austrag aus der Reaktionszone auch in Abwesenheit von Sauerstoff mit einer Kobalt(II)-ionen enthaltenden wässrigen Lösung behandeln, wobei ein wasserlösliches komplexes Salz in Form von $Co[Co(CO)_4]_2$ gebildet wird, das dann mit Sauerstoff oder Luft zur einheitlich zweiwertigen Form des Kobalts oxidiert wird. Ein solches Verfahren ist z. B. dann sinnvoll, wenn man den Robaltcarbonylkatalysator nicht quantitativ durch Oxidation zerstören will, sondern zuvor einen Teil davon unzersetzt mittels eines Strippgases abtrennt. Die Strippgasbehandlung des Reaktionsaustrags kann zweckmäßigerweise mit dem Ausstrippen des Kobaltcarbonylkatalysators aus einer diesen enthaltenden wässrigen Lösung kombiniert werden, wie dies weiter unten für eine bevorzugte Ausführungsform des erfindungsgemäßen Verfahrens angegeben ist.

Als Katalysatorvorläufer ist neben wässrigen Kobalt(II)-salzlösungen auch eine wässrige Lösung eines Salzes des Kobalttetracarbonylanions, insbesondere des Natriumsalzes, geeignet. Diese kann zur Herstellung des Kobaltcarbonylkatalysators z. B. mit Schwefelsäure angesäuert werden. Zur Abtrennung des Kobaltcarbonylkatalysators unter Rückbildung des Kobalttetracarbonylanions kann der Austrag aus der Reaktionszone mit der wässrigen Lösung einer Base, z. B. mit Sodalösung, behandelt werden, wobei der Kobaltcarbonylwasserstoff wieder in ein wasserlösliches Salz davon überführt wird.

Nach den vorstehenden Methoden der Katalysatorherstellung erhält man eine den Kobaltcarbonylkatalysator enthaltende wässrige Phase. Der vorgebildete Kobaltcarbonylkatalysator kann außerhalb der Reaktionszone aus der wässrigen in die organische Phase transferiert werden. Andernfalls führt man die den Kobaltcarbonylkatalysator enthaltende wässrige Phase als solche in die Reaktionszone ein. Im ersten Fall löst man den Kobaltcarbonylkatalysator in einer die Polyalkylene enthaltenden organischen Phase und führt die mit dem Kobaltcarbonylkatalysator beladene organische Phase in die Reaktionszone ein. Zum Lösen des Kobaltcarbonylkatalysators in der organischen Phase kann man die den Kobaltcarbonylkatalysator enthaltende wässrige Phase mit der organischen Phase in Kontakt bringen, wobei der Kobaltcarbonylkatalysator zumindest teilweise in die organische Phase extrahiert wird.

Zur Extraktion des Kobaltcarbonylkatalysators aus der wässrigen Phase in die organische Phase eignen sich alle in der Technik eingeführten Vorrichtungen, die für eine drucklose Extraktion oder eine Druckextraktion geeignet sind. Mit Vorteil werden Gegenstromextraktionsapparate verwendet, die zur Schaffung einer großen Phasenaustauschfläche mit Füllkörpern, z. B. Raschig-Ringen, Pallringen oder Glaskugeln, gefüllt sein oder Labyrinthpackungen aufweisen können. Alternativ sind nach dem Mixer-Settler-Prinzip arbeitende Einrichtungen oder intensiv gerührte Behälter geeignet.

Vorteilhaft verwendet man zur Extraktion die Gesamtmenge organischer Phase, die anschließend in die Reaktionszone eingeführt wird, d. h. das gesamte Polyalkylen bzw. das Gemisch aus Alkylen und mitverwendeten Lösungsmitteln. Vorzugsweise wählt man den Mengenstrom so, dass ein Phasenverhältnis von wässriger zu organischer Phase von etwa 1:1 bis 1:50, insbesondere 1:10 bis 1:20, erhalten wird.

Die Bedingungen bei der Katalysatorextraktion sind so zu wählen, dass bei der Katalysatorextraktion noch keine Hydroformylierung einsetzt. Im Allgemeinen ist eine Temperatur von 5 bis 150 °C, vorzugsweise 70 bis 100 °C, und ein Druck von 50 bis 400 bar, vorzugsweise 250 bis 300 bar, geeignet. Wird der Kobaltkatalysator durch Behandeln einer wässrigen Kobalt(II)-salzlösung mit Synthesegas hergestellt, sind bei der Katalysatorextraktion vergleichbare Bedingungen hinsichtlich Druck und Temperatur geeignet wie bei der Katalysatorherstellung.

Anstelle einer Flüssig-flüssig-Extraktion ist es auch möglich, die den Kobaltcarbonylkatalysator enthaltende wässrige Phase, gegebenenfalls in Gegenwart des ebenfalls Kobaltcarbonylkatalysator enthaltenden Austrags aus der Reaktionszone, mit einem Strippgas, insbesondere Synthesegas, zu behandeln und das mit dem Kobaltcarbonylkatalysator beladene Strippgas mit einer die Polyalkylene enthaltenden organischen Phase in Kontakt bringen, wobei der Kobaltcarbonylkatalysator zumindest teilweise in der organischen Phase absorbiert wird.

Alternativ kann man in die Reaktionszone gleichzeitig eine die Polyalkylene enthaltende organische Phase und die den Robaltcarbonylkatalysator enthaltende wässrige Phase einführen, wobei eine Extraktion des Kobaltcarbonylkatalysators in die organische Phase in diesem Fall in der Reaktionszone erfolgt. Hierzu werden die den Kobaltcarbonylkatalysator enthaltende wässrige Phase und die die Polyalkylene enthaltende organische Phase so in die Reaktionszone eingebracht, dass eine gute Phasenvermischung erfolgt und eine möglichst hohe Phasenaustauschfläche erzeugt wird. Für die Dosierung können die dem Fachmann bekannten Dosiervorrichtungen, wie z. B. mit Füllkörpern befüllte Turbulenzrohre oder Mischdüsen für Mehrphasensysteme, eingesetzt werden. Die beiden Phasen können gegebenenfalls zusammen mit dem Synthesegas über eine Leitung der Reaktionszone zugeführt werden.

Wird die den Kobaltcarbonylkatalysator enthaltende wässrige Phase zusammen mit der organischen Phase in die Reaktionszone eingeführt, so ist dafür zu sorgen, dass sich die wässrige Phase in der Reaktionszone nicht ansammelt, was zum allmählichen Rückgang und gegebenenfalls zum gänzlichen Erliegen der Hydroformylierungsreaktion führen kann. Dies kann z. B. dadurch erreicht werden, dass der Reaktionsaustrag an mehreren Stellen der Reaktionszone oder - bei Verwendung mehrerer Reaktionszonen - zumindest der ersten Reaktionszone, z. B. des ersten Reaktors einer Reaktorkaskade, abgezogen wird. Nimmt man den Reaktionsaustrag z. B. nämlich nur am Kopf des Reaktors ab, so wird unter Umständen die Menge der der Reaktionszone zugeführten wässrigen Phase, die zur Erreichung einer ausreichenden Katalysatorkonzentration in der Reaktionszone notwendig ist, nicht vollständig in gelöster oder suspendierter Form mit dem Reaktionsgemisch abgeführt. Die spezifische schwerere wässrige Phase reichert sich im Sumpfraum an. Daher wird in einer bevorzugten Ausführungsform Reaktionsaustrag sowohl am Kopf des Reaktors als auch aus dem Sumpfraum des Reaktors entnommen. Der Reaktionsaustrag aus dem Sumpfraum umfasst in der Regel 10 bis 100 Vol.-%, insbesondere 30 bis 50 Vol.-% wässrige Phase.

Die organische Phase enthält vorteilhaft neben den Polyalkylenen ein organisches Lösungsmittel, wobei aromatische oder aliphatische Kohlenwasserstoffe bevorzugt sind. Als Beispiele lassen sich Benzol, Toluol, Xylole, Ethylbenzole, Cyclohexan, Paraffinfraktionen, insbesondere lineare oder verzweigte $C_6$-$C_{30}$-Alkane, nennen. Bevorzugte Lösungsmittel sind im Wesentlichen wasserunlöslich und gut mit den Polyalkylenen sowie dem Kobaltcarbonylkatalysator mischbar.

Die Temperatur bei der Hydroformylierung liegt im Allgemeinen bei 100 bis 250 °C, insbesondere 120 bis 200 °C. Die Umsetzung wird vorzugsweise bei einem Druck im Bereich von 150 bis 400 bar, insbesondere 200 bis 300 bar, durchgeführt.

Geeignete druckfeste Reaktoren für die Hydroformylierung sind dem Fachmann bekannt. Dazu zählen die allgemein üblichen Reaktoren für Gas-flüssig-Reaktionen, wie z. B. Rohrreaktoren, Rührkessel,

Gasumlaufreaktoren, Blasensäulen usw., die gegebenenfalls durch Einbauten unterteilt sein können. Geeignet ist beispielsweise ein senkrecht stehender Hochdruck-Blasensäulenreaktor, der gegebenenfalls mit koaxialen rohrförmigen Einbauten versehen ist. Als "Reaktionszone" wird für die Zwecke der vorliegenden Erfindung der Bereich eines Reaktors angesehen, in dem geeignete Druck- und Temperaturbedingungen herrschen und die Reaktionspartner so in Kontakt miteinander kommen, dass die Hydroformylierungsreaktion abläuft. Zur Erzielung möglichst hoher Umsätze kann es bevorzugt sein, die Hydroformylierung in wenigstens zwei aufeinanderfolgenden Reaktionszonen, die sich in einem oder mehreren Reaktoren befinden können, durchzuführen. Von mehreren Reaktionszonen wird gesprochen, wenn zwischen ihnen im Wesentlichen keine Rückvermischung stattfindet. Die Ausbildung mehrerer Reaktionszonen in einem Reaktor kann durch geeignete Kaskadierung des Reaktors erreicht werden. Alternativ können zwei oder mehrere Reaktoren hintereinander geschaltet werden, um die Hydroformylierung in mehreren Reaktionszonen durchzuführen. In die zweite oder eine weitere Reaktionszone kann gegebenenfalls frisches Synthesegas eingebracht werden. Ein gleichmäßiger Stofftransport von der ersten Reaktionszone zur zweiten bzw. weiteren Reaktionszone erfolgt vorzugsweise durch Aufrechterhalten eines konstanten Differenzdrucks von wenigen bar, z. B. 2 bis 5 bar.

Synthesegas ist ein technisches Gemisch von Kohlenmonoxid und Wasserstoff. Die Zusammensetzung des im erfindungsgemäßen Verfahren eingesetzten Synthesegases kann in weiten Bereichen variieren. Das molare Verhältnis von Kohlenmonoxid und Wasserstoff beträgt in der Regel etwa 10:1 bis 1:10, insbesondere 2,5:1 bis 1:2,5. Ein bevorzugtes Verhältnis liegt bei etwa 40:60 bis 50:50.

Das erfindungsgemäße Verfahren wird vorzugsweise so durchgeführt, dass die Konzentration des Kobaltcarbonylkatalysators, gerechnet als Kobalt, bezogen auf die der Reaktionszone zugeführte organische Phase 0,05 bis 1,5 Gew.-%, insbesondere 0,1 bis 0,5 Gew.-%, beträgt.

Eine bevorzugte Ausgestaltung des erfindungsgemäßen Verfahrens ist ein Verfahren, bei dem man

> a) eine wässrige Kobalt(II)-salzlösung unter Bildung eines Kobaltcarbonylkatalysators innig mit Synthesegas in Kontakt bringt,

> b) die den Kobaltcarbonylkatalysator enthaltende wässrige Phase mit einer die Polyalkylene enthaltenden organischen Phase in Kontakt bringt, wobei der Kobaltcarbonylkatalysator zumindest teilweise in die organische Phase extrahiert wird,

> c) die organische Phase mit Synthesegas in der Reaktionszone bei erhöhtem Druck und erhöhter Temperatur hydroformyliert,

> d) den Austrag aus der Reaktionszone in Gegenwart von wässriger Kobalt(II)-salzlösung mit Sauerstoff behandelt, wobei der Kobaltcarbonylkatälysator unter Bildung von Kobalt(II)-salzen zersetzt wird und diese in die wässrige Phase zurückextrahiert werden, und

> e) die wässrige Kobalt(II)-salzlösung in Schritt a) zurückführt.

Die Extraktion des Kobaltcarbonylkatalysators in die Polyalkylene enthaltende organische Phase in Schritt b) kann wahlweise außerhalb der Reaktionszone oder gleichzeitig mit der Hydroformylierung in der Reaktionszone erfolgen, wozu zur Vermeidung von Wiederholungen auf die obigen Ausführungen verwiesen wird. Meist ist es im Hinblick auf den geringeren apparativen Aufwand bevorzugt, wenn die Katalysatorextraktion in der Reaktionszone erfolgt, d. h. die wässrige und die organische Phase kommen erst in der Reaktionszone miteinander in Kontakt.

In der Entkobaltungsstufe (Schritt d) wird der Austrag aus der Reaktionszone in Gegenwart von wässriger schwach saurer Kobalt(II)-salzlösung mit molekularem Sauerstoff, üblicherweise in Form von Luft, behandelt. Dabei wird das im Kobaltcarbonylkatalysator enthaltene Kobalt gemäss folgender Gleichung von der Oxidationsstufe -1 nach +2 oxidiert und durch Extraktion mit der wässrigen Phase aus der organischen Phase des Reaktionsaustrags entfernt:

$$2HCo(CO)_4 + 1{,}5O_2 + 4H^+ \rightarrow 2Co^{2+} + 8CO + 3H_2O$$

Im Allgemeinen verwendet man die 0,1- bis 10-fache Menge, vorzugsweise die 0,1- bis 1-fache Menge, insbesondere die 0,5- bis 0,9-fache Menge an wässriger Phase, bezogen auf die zu behandelnde organische Phase, gemessen in kg/kg. Durch diese Maßnahme wird erreicht, dass die wässrige Phase in Form kleiner Tröpfchen als disperse Phase vorliegt, und die organische Phase liegt dann als Wasser-in-Öl-Emulsion vor. Es hat sich als vorteilhaft erwiesen, das angegebene Phasenverhältnis einzustellen, da dann die nachfolgende Auftrennung der Phasen wesentlich erleichtert wird.

Bei der Entkobaltung arbeitet man im Allgemeinen bei einem pH-Wert von 2 bis 6, vorzugsweise 3 bis 4. Zur pH-Kontrolle ist die Zudosierung einer Carbonsäure, insbesondere Ameisensäure oder Essigsäure, geeignet. Der Säuregehalt der wässrige Phase sollte in jedem Fall so bemessen sein, dass er ausreichend ist, das gesamte Kobalt gemäß obiger Gleichung aufzunehmen.

Es hat sich als vorteilhaft erwiesen, als saure wässrige Lösung in der Entkobaltung die nach der Katalysatorherstellung und -extraktion anfallende Kobaltabgereicherte Kobalt(II)-salzlösung. Durch die Rückextraktion der Kobalt(II)-salze bei der Entkobaltung erfolgt eine Konzentrationserhöhung auf im Wesentlichen die ursprüngliche Kobaltkonzentration. Die derart bei der Entkobaltung anfallende wässrige Kobalt(II)-Salzlösung kann dann zurück in die Stufe der Katalysatorherstellung geführt werden. Die Konzentration an Kobalt(II)-salzen im Kreislauf wird zweckmäßigerweise so gewählt, dass die Kobalt(II)-salze gelöst bleiben und nicht ausfallen. Bewährt hat sich eine Kobalt(II)-konzentration im Kreislauf der Robalt(II)-salzlösung von 0,5 bis 2 Gew.-% Kobalt.

Gleichzeitig mit der sauren wässrigen Phase bringt man den Austrag aus der Reaktionszone mit molekularem Sauerstoff, vorzugsweise in Form von Luft, in Kontakt. Die Menge an molekularem Sauerstoff ist so bemessen, dass, bezogen auf das im Austrag aus der Reaktionszone enthaltene Kobalt, mindestens die zweifache, vorzugsweise die 2,1-fache Menge an molekularem Sauerstoff vorhanden ist. Im Falle der Verwendung von Luft bedeutet dies, dass pro Gramm Kobalt 2,7 $Nm^3$ Luft anzuwenden sind. Vorzugsweise sollte die Menge an Sauerstoff das 2,5-fache der stöchiometrisch erforderlichen Menge nicht überschreiten. Zur erfolgreichen Durchführung der Entkobaltung hat es sich bewährt, die saure wässrige Phase bereits vor dem Kontakt mit der organischen Phase mit Luft in Kontakt zu bringen. Dabei sättigt sich die wässrige Phase mit dem angebotenen Sauerstoff, wodurch die nachfolgende Oxidation nicht durch einen langsamen, über eine Gas-flüssig-Grenzfläche hinweg stattfindenden Stofftransport gehemmt ist. Die Vermischung der wässrigen Phase und der molekularen Sauerstoff enthaltenden gasförmigen Phase kann in jedem Apparat zur Durchführung von Gas-flüssig-Reaktionen erfolgen, z. B. einer Blasensäule, einer Mischstrecke, einem intensiv gerührten Mischkessel oder einer Zweistoffdüse.

Die Entkobaltung erfolgt vorzugsweise bei erhöhter Temperatur. Im Allgemeinen wendet man Temperaturen von 50 bis 150 °C, vorzugsweise von 100 bis 120 °c an. Die Behandlung kann drucklos oder unter erhöhtem Druck stattfinden. Besonders bewährt hat sich die Anwendung eines Drucks von mehr als 1 bar, vorzugsweise 5 bis 50 bar. Die Verweilzeit in der Entkobaltungsstufe kann innerhalb weiter Grenzen variiert werden.

Bei der Entkobaltung ist eine intensive Durchmischung der organischen und wässrigen Phase angestrebt. Die Durchmischung kann z. B. in einem Rührbehälter, einer Zweistoffdüse oder einer Mischstrecke, z. B. einer Füllkörperschüttung, erfolgen. Als Füllkörper sind Raschig-Ringe, Pallringe, Glaskugeln und dergleichen geeignet.

Anschließend trennt man zweckmäßigerweise zuerst die Gasphase von den beiden Flüssigphasen und trennt dann die wässrige von der organischen Phase ab. Zur Phasentrennung kann das Gemisch aus wässriger und organischer Phase in eine Beruhigungszone geleitet und aufgetrennt werden. Dies geschieht zweckmäßigerweise in einem liegenden, kontinuierlich betriebenen Phasentrenngefäß, das mit geringer Strömungsgeschwindigkeit durchflossen wird. Bedingt durch den Dichteunterschied der Phasen trennt sich die Emulsion im Erdschwerefeld, so dass beide Phasen in zusammenhängender Form und weitgehend fremdphasenfrei übereinander geschichtet vorliegen. Man erhält die wässrige Phase praktisch frei von organischer Phase, so dass die Kobalt(II)-salzlösung ohne weitere Aufarbeitung in die Katalysatorbildungs- und Entkobaltungsstufe zurückgeführt werden kann. Die organische Phase fällt in der Regel als Feinemulsion an, die fein dispergierte Tröpfchen der wässrigen Phase enthält. Die Feinemulsion ist meist sehr stabil und die Phasentrennung aufgrund der Dichtedifferenz erfordert sehr lange Verweilzeiten. Um die Koaleszenz der restlichen dispergierten wässrigen Phase zu beschleunigen, benutzt man mit Vorteil eine oder mehrere mechanische Koaleszenzstufen mit integrierter oder nachgeschalteter Phasentrenneinrichtung. Geeignet sind im Allgemeinen Abscheider mit Koaleszenzeinbauten, wie Füllkörpern, Koaleszenzflächen oder feinporigen Elementen. Vorzugsweise leitet man die Feindispersion von oben nach unten durch eine Füllkörperschüttung. Durch Benetzung der großen Füllkörperoberfläche kommt es zur Oberflächenkoaleszenz und gleichzeitig durch Tropfenbewegung zur Tropfen-Tropfen-Koaleszenz. In einer zweckmäßigen Ausführungsform wird eine vertikal angeordnete Füllkörperkolonne verwendet, wobei die Füllkörper aus einem Material bestehen, das durch die disperse wässrige Phase benetzt wird, und die Füllkörperschüttung durch die organische Phase geflutet ist. Bevorzugt werden Füllkörperkolonnen verwendet, die mit Füllkörpern aus Metall, z. B. Metallringen, gefüllt sind. Die sich bildenden großen Tropfen der wässrigen Phase scheiden sich rasch ab und können als Unterphase abgezogen werden.

Bei der Phasentrennung werden mit Vorteil Emulsionsspalter mitverwendet. Als Emulsionsspalter kommen insbesondere alkoxylierte Verbindungen in Betracht, wie sie üblicherweise in der Erdölindustrie zur Abtrennung salzhaltigen Wassers Verwendung finden. Diese sind z. B.

a) mit Propylenoxid und gegebenenfalls zusätzlich Ethylenoxid alkoxylierte Oligo- und Polyamine und -imine,

b) alkoxylierte Alkylphenolformaldehydharze und

c) Ethylenoxid/Propylenoxid-Blockcopolymere, sowie

d) deren polymere Acrylsäureester,

wie sie in der DE-A-2 227 546 und der DE-A-2 435 713 (a), der DE-A-2 013 820 (b), DE-A-1 545 215 (c) und der DE-A-4 326 772 (d) beschrieben sind.

Besonders bevorzugt ist die Verwendung eines Emulsionsspalters, der durch Umsetzung von Polyethylenimin mit einem Molekulargewicht von 10000 bis 50000 mit solchen Mengen Propylenoxid und gegebenenfalls zusätzlich Ethylenoxid erhalten wird, dass der Gehalt an Alkoxyeinheiten 90 bis 99 Gew.-% beträgt.

Die Aufwandmenge an Emulsionsspaltern, die zur Erzielung des gewünschten Effekt zudosiert wird, beträgt im Allgemeinen etwa 0,1 bis 100 g/t eingesetzter organischer Phase, vorzugsweise 2 bis 20 g/t.

Bevorzugt wird der Emulsionsspalter in verdünnter Form kontinuierlich zugegeben. Die Verdünnung mit einem inerten Lösungsmittel, z. B. ortho-Xylol, erleichtert die Handhabung sowie die Dosierung der geringen benötigten Menge. Die Zugabe erfolgt zweckmäßigerweise zusammen mit der Zugabe der wässrigen Extraktionslösung und der Luft unter Entspannung, wodurch der Emulsionsspalter wirkungsvoll eingemischt wird.

Eine weitere bevorzugte Ausgestaltung des erfindungsgemäßen Verfahrens ist ein Verfahren, bei dem man

a) eine mit einem Kobaltcarbonylkatalysator beladene Polyalkylene enthaltende organische Phase mit Synthesegas in der Reaktionszone bei erhöhtem Druck und erhöhter Temperatur hydroformyliert,

b) den Austrag aus der Reaktionszone mit einer wässrigen Säure versetzt und in Gegenwart einer einen Kobaltcarbonylkatalysator enthaltenden wässrigen Phase mit einem Strippgas strippt, wobei der Kobaltcarbonylkatalysator zumindest teilweise vom Strippgas mitgeführt und teilweise in eine wasserlösliche Form überführt und in die wässrige Phase extrahiert wird,

c) die wässrige Phase mit Sauerstoff behandelt, wobei die wasserlösliche Form des Kobaltcarbonylkatalysators unter Bildung von Kobalt(II)-salzen zersetzt wird;

d) die wässrige Kobalt(II)-salzlösung unter Bildung eines Kobaltcarbonylkatalysators innig mit Synthesegas in Kontakt bringt und die den Kobaltcarbonylkatalysator enthaltende wässrige Phase in Schritt b) zurückführt,

e) das mit dem Kobaltcarbonylkatalysator beladene Strippgas aus Schritt b) mit einer Polyalkylene enthaltenden organischen Phase in Kontakt bringt, wobei der Kobaltcarbonylkatalysator zumindest teilweise in der organischen Phase absorbiert wird, und die organische Phase in den Schritt a) zurückführt.

Als wässrige Säure in Schritt b) ist Ameisensäure besonders geeignet. Das Verfahren gemäß dieser Ausgestaltung kann analog dem in der US 5,434,318 beschriebenen Verfahren durchgeführt werden, auf die vollinhaltlich Bezug genommen wird.

Eine weitere bevorzugte Ausgestaltung des erfindungsgemäßen Verfahrens ist ein Verfahren, bei dem man

a) eine wässrige Lösung eines Salzes des Kobalttetracarbonylanions unter Bildung eines hydroformylierungsaktiven Kobaltcarbonylkatalysators ansäuert,

b) die den Kobaltcarbonylkatalysator enthaltende wässrige Lösung mit einer die Polyalkene enthaltenden organischen Phase innig in Kontakt bringt, wobei der Kobaltcarbonylkatalysator zumindest teilweise in die organische Phase extrahiert wird,

c) die organische Phase in der Reaktionszone hydroformyliert,

d) den Austrag aus der Reaktionszone unter Rückbildung des Kobalttretracarbonylanions mit einer wässrigen Lösung einer Base behandelt, und die wässrige Lösung in Schritt a) zurückführt.

Das Verfahren gemäß dieser Ausgestaltung kann analog zu dem in H. Lemke, "Select the Best Oxo Catalyst Cycle" Hydrocarbon Processing Petrol. Refiner, 45(2) (Feb. 1966), 148-152 beschriebenen Verfahren durchgeführt werden.

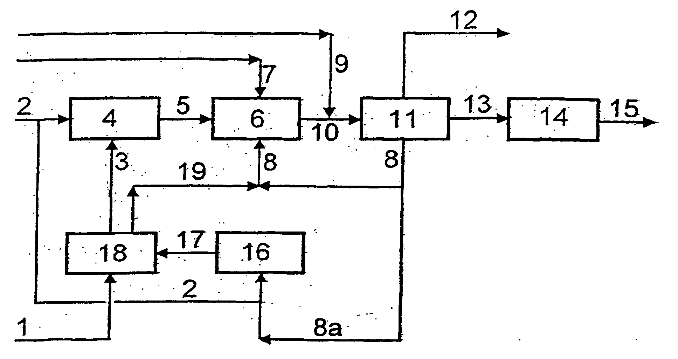

Das erfindungsgemäße Verfahren wird nun anhand der beigefügten Figuren 1 bis 3 näher erläutert. An sich selbstverständliche Details, die für das Verständnis der vorliegenden Erfindung nicht erforderlich sind, wurden aus Gründen der Übersichtlichkeit weggelassen.

Fig. 1 zeigt schematisch eine zur Ausübung des erfindungsgemäßen Verfahrens mit separater Extraktionsstufe geeignete Anlage. Einer Carbonylbildungszone (16) wird über Leitung (8a) eine wässrige Kobalt(II)-salzlösung und über Leitung (2) Synthesegas zugeführt. Der Austrag der Carbonylbildungszone (16) wird über die Leitung (17) in die Extraktionszone (18) überführt, der gleichzeitig über die Leitung (1) ein Polyalkylen bzw. ein Gemisch von Polyalkylen und einem Lösungsmittel zugeführt wird. Dabei wird der gebildete Kobaltcarbonylkatalysator weitgehend in die Polyalkylen-haltige Phase überführt, die dann nach Phasentrennung über Leitung (3) dem Reaktionssystem (4) zugeführt wird. Die an Kobaltcarbonylen verarmte, noch Kobalt(II)-salz enthaltende wässrige Lösung wird über die Leitungen (19) und (8) der Entkobaltungsstufe (6) zugeführt. Im Reaktionssystem (4), das aus mehreren Reaktoren oder einem Reaktor mit geeigneten Einbauten bestehen kann, findet unter Hydroformylierungsbedingungen die Umsetzung des Polyalkylens mit Synthesegas zu Hydroformylierungsprodukten statt. Der Austrag aus dem Reaktionssystem wird über die Leitung (5) der Entkobaltungsstufe (6) zugeführt und wird mit Luft über Leitung (7) und einer wässrigen sauren Kobalt(II)-salzlösung überleitung (8) behandelt. Dabei wechselt das Kobalt die Oxidationsstufe von -1 nach +2 und wird in der sauren wässrigen Phase als Kobalt(II)-salz gelöst. Unmittelbar nach der Entkobaltung wird über Leitung (9) ein Emulsionsspalter zugegeben. Der rohe Austrag wird dann über die Leitung (10) in ein Phasentrenngefäß (11) geleitet. Hierbei trennen sich Gasphase und die beiden Flüssigphasen. Über die Leitung (12) werden die nicht umgesetzten Anteile der Luft sowie aus der Synthesestufe mitgeführte Anteile an Kohlenmonoxid und Wasserstoff abgeleitet. Die abgeschiedene wässrige Phase wird über die Leitung (8a) wieder der Carbonylbildungszone (16) zugeführt. Nach der Phasentrennung (11) wird die organische Phase, die noch geringe Mengen wässriger Phase enthält, über die Leitung (13) einer Koaleszenzstufe (14), z. B. einer mit Metallfüllkörpern gefüllten Füllkörperkolonne, zugeführt. Nach Abtrennung der koaleszierten wässrigen Phase kann über die Leitung (15) das rohe Hydroformylierungsprodukt der weiteren Aufarbeitung zugeführt werden.

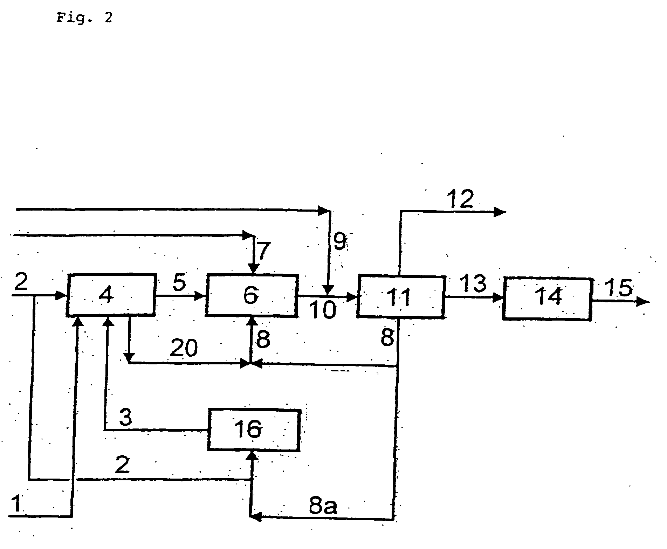

Fig. 2 zeigt eine Ausführungsform des erfindungsgemäßen Verfahrens ohne separate Extraktionsstufe. Einer Carbonylbildungszone (16) wird über die Leitung (8a) eine wässrige Robalt(II)-salzlösung und über die Leitung (2) Synthesegas zugeführt. Der Austrag aus der Carbonylbildungszone wird über die Leitung (3) dem aus zwei hintereinander geschalteten Reaktoren bestehenden Hydroformylierungssystem (4) zugeführt, in das außerdem über die Leitung (2) Synthesegas und über die Leitung (1) das Polyalkylen bzw. ein Gemisch von Polyalkylen und Lösungsmittel zugeführt wird. Der Austrag aus dem Reaktionssystem wird, wie oben mit Bezug auf Fig. 1 geschildert, über die Leitung (5) der Entkobaltungsstufe (6) zugeführt. Außerdem wird am Boden des ersten Reaktors des Hydroformylierungssystems eine an Kobaltcarbonylen verarmte wässrige Phase abgezogen und über Leitung (20) der Entkobaltungsstufe (6) zugeführt. Auf diese Ausschleusung kann verzichtet werden, wenn die an Kobaltcarbonylen verarmte wässrige Phase im Hydroformylierungsgemisch löslich oder dispergierbar ist. Die weitere Aufarbeitung erfolgt wie vorstehend mit Bezug auf Fig. 1 beschrieben, wobei gleichen Bezugsziffern die gleiche Bedeutung zukommt.

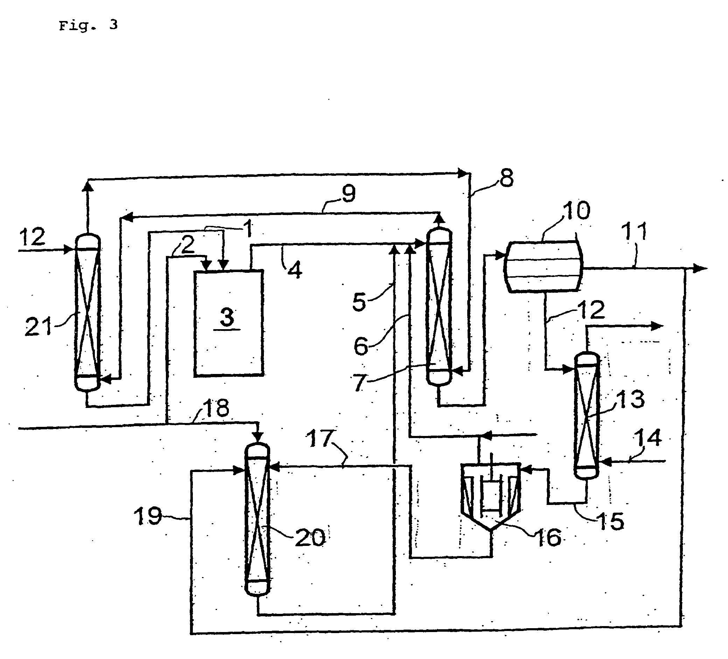

Fig. 3 zeigt eine Ausführungsform des erfindungsgemäßen Verfahrens, bei der der vorgebildete Kobaltcarbonylkatalysator mittels eines Strippgases ausgestrippt und in der zu hydroformylierenden organischen Phase absorbiert wird. Dem Reaktor (3) werden über die Leitung (1) eine Kobaltcarbonylkatalysator und Polyalkylene enthaltende organische Phase und über die Leitung (2) Synthesegas zugeführt. Im Reaktor (3) erfolgt bei erhöhter Temperatur und erhöhtem Druck die Hydroformylierungsreaktion. Der Reaktionsaustrag wird über die Leitung (4) abgeführt und über die Leitung (6) mit einer wässrigen Lösung einer Carbonsäure, wie Ameisensäure, versetzt. Der so behandelte Reaktionsaustrag wird im Stripper (7) mit'einem Strippgas, z. B. Synthesegas, behandelt, wobei der flüchtige Robaltcarbonylkatalysator zum Teil vom Strippgas mitgeführt und über die Leitung (9) abgenommen wird. Am Boden des Strippers (7) wird ein heterogenes Gemisch des organischen Reaktionsaustrags und der gelöste Kobaltverbindungen enthaltenen wässrigen Phase abgenommen und einem Phasentrenngefäß (10) zugeführt. Die organische Phase wird über die Leitung (11) abgenommen und der weiteren Aufarbeitung zugeführt. Die wässrige Phase wird über die Leitung (12) der Entkobaltungsvorrichtung (13) zugeführt, wo sie mit einem sauerstoffhaltigen Gas, wie Luft, behandelt wird und die löslichen Kobaltverbindungen in Kobalt(II)-salze umgewandelt werden. Die behandelte wässrige Lösung wird über die Leitung (15) einem Eindampfer (16) zugeführt, wo eine aufkonzentrierte Kobalt(II)-salzlösung und eine wässrige Carbonsäurelösung erhalten werden. Die wässrige Carbonsäurelösung kann über Leitung (6) zum Ansäuern des organischen Reaktionsaustrags der Hydroformylierung verwendet werden. Die aufkonzentrierte Kobalt(II)-salzlösung wird über die Leitung (17) dem Kobaltcarbonyl-Generator (20) zugeführt, dem über die Leitung (18) außerdem Synthesegas zugeführt wird. Zweckmäßigerweise wird dem Kobaltcarbonyl-Generator (20) über die Leitung (19) außerdem eine kleine Menge des entkobalteten rohen Hydroformylierungsprodukts zugeführt. Im Kobaltcarbonyl-Generator (20) wird aus den gelösten Kobalt(II)-salzen ein Kobaltcarbonylkatalysator hergestellt, der über Leitung (5) dem Stripper (7) zugeführt wird. Das mit dem Kobaltcarbonylkatalysator beladene Strippgas aus dem Stripper (7) wird über die Leitung (9) dem Absorber (21) zugeführt, dem über die Leitung (22) eine Polyalkylene enthaltende organische Phase zugeführt wird. Das an dem Kobaltcarbonylkatalysator verarmte Strippgas wird über die Leitung (8) erneut dem Stripper (7) zugeführt. Die mit dem Kobaltcarbonylkatalysator beladene organische Phase wird über Leitung (1) dem Reaktor (3) zugeführt.

Das erfindungsgemäße Verfahren wird durch die nachfolgenden Beispiele näher erläutert.

Beispiele

Vergleichsbeispiel 1: Verwendung von wässriger Kobaltsalzlösung als Hydroformylierungskatalysator

Es wurden stündlich 3660 kg einer Mischung aus 1940 kg Polyisobutenen und 1720 kg einer $C_{10}$-$C_{14}$-Paraffinkohlenwasserstofffraktion in ein Hydroformylierungsreaktorsystem eingeleitet. Gleichzeitig führte man dem System 300 kg/h wässrige saure Kobaltformiatlösung zu, deren pH-Wert mit Ameisensäure auf etwa 3,4 eingestellt wurde und die 1,3 Gew.-% Kobalt enthielt.

Im Hydroformylierungsreaktorsystem fand bei 180 bis 185 °C die Hydroformylierungsreaktion statt. Der Reaktordruck von etwa 270 bar wurde durch Zufuhr der notwendigen Menge Synthesegas konstant gehalten.

Nach dem Passieren der Reaktorstrecke wurde das Produkt in eine Entkobaltungsstufe entspannt. Der Druck wurde dabei von etwa 270 auf 20 bar abgesenkt. In die Entkobaltungszone wurden pro Stunde außerdem 2600 kg Kobaltsalzlösung der oben genannten Zusammensetzung sowie 17 kg Luft geleitet. Unmittelbar nach dem Ausgang der Entkobaltungsstufe wurde ein Emulsionsspalter als verdünnte Lösung so zugegeben, dass die Konzentration an Spalter 12 g pro t Reaktionsaustrag betrug. Der Emulsionsspalter war ein mit Propylenoxid modifiziertes Polyethylenimin (Molekulargewicht des zur Herstellung verwendeten Polyethylenimins: etwa 20000; Gehalt an Propoxy-Einheiten 99 Gew.-%, vergleiche WO 98/12235).

In einer Beruhigungszone wurden pro Stunde 200 kg Entspannungsgas abgetrennt und in ein Sammelsystem abgeleitet.

Die Flüssigphasen wurden voneinander getrennt. Die wässrige Phase war weitgehend frei von organischen Anteilen, der Gehalt an Kobaltcarbonylen betrug nur 0,05 Gew.-%.

Die organische Phase enthielt noch etwa 0,7 Gew.-% Fremdphase.
Die weitere Aufarbeitung erfolgte wie in WO 98/12235 beschrieben. Das eingesetzte Polyisobutylen wurde zu 93 % umgesetzt. 62 % des umgesetzten Polyisobutens wurden in die Wertprodukte Polyisobutylaldehyd, -alkohol oder -ester umgewandelt. Die Ermittlung des Polyisobutenumsatzes sowie der Ausbeuten an Polyisobutenaldehyd, - alkohol oder -ester erfolgte säulenchromatographisch sowie durch Ermittlung der dem Fachmann geläufigen Kennzahlen.

Beispiel 2: Verwendung von organischen Kobaltcarbonyllösungen als Hydroformylierungskatalysator

Man führte einer Vorcarbonylierungsreaktor 208 kg/h wässrige saure Kobaltformiatlösung zu, deren pH-Wert mit Ameisensäure auf 3,4 eingestellt wurde und die 1,3 Gew.-% Kobalt enthielt. Die Umwandlung des Kobaltformiats in Kobaltcarbonyle erfolgte bei 95 °C und 280 bar mit einem Gasgemisch von 40 Vol.-% CO und 59 Vol.-% $H_2$ (+1 % Inertgase). Es wurde im Wesentlichen das gesamte zur Durchführung der Hydroformylierung notwendige Gas durch den Vorcarbonylierungsreaktor geleitet Dieser hatte ein Volumen von 2,3 $m^3$ und war mit Aktivkohle gefüllt. Nach dem Durchgang durch den Vorcarbonylierungsreaktor hatten sich 70 % des angebotenen Kobalts in Kobaltcarbonylwasserstoff umgewandelt.

Der Austrag des vorcarbonylierungsreaktors wurde ohne Entspannung in eine Extraktionszone geführt, in die außerdem stündlich 3660 kg einer Mischung aus 1940 kg Polyisobuten und 1720 kg einer $C_{12}$-$C_{14}$-Paraffinkohlenwasserstofffraktion eingeleitet wurden. In der Extraktionszone, bestehend aus einer Misch- und einer Beruhigungszone, wurden die Kobaltcarbonyle weitgehend von der wässrigen Phase in die aus dem Polyisobuten und der $C_{12}$-$C_{14}$-Paraffinkohlenwasserstofffraktion bestehenden organischen Phase überführt. Die an Kobaltcarbonylen verarmte wässrige Phase, 185 kg/h, wurde der Entkobaltungsstufe zugeführt.

Die mit Kobaltcarbonylen beladene organische Phase, 3700 kg/h, wurde dem Hydroformylierungssystem zugeführt. Das Reaktionssystem hatte ein Reaktionsvolumen von 21,7 $m^3$, so dass die Reaktionsraumbelastung 0,17 kg/l*h betrug. Im Reaktionssystem fand bei 181 °C die Hydroformylierungsreaktion statt. Der Reaktionsdruck von 270 bar wurde durch Zufuhr der notwendigen Menge Synthesegas konstant gehalten, das der Vorcarbonylierungszone entnommen wurde.

Nach dem Passieren der Reaktionsstrecke wurde das Produkt in eine Entkobaltungszone entspannt. Der Druck wurde dabei von 270 auf 20 bar abgesenkt. In die Entkobaltungszone wurden pro Stunde außerdem 2300 kg Kobaltsalzlösung der oben genannten Zusammensetzung sowie 9,5 kg Luft geleitet, die vor dem Eintritt in die Entkobaltungszone in einer Zweistoffdüse intensiv gemischt wurden und danach eine Blasensäule mit einer mittleren Verweilzeit von etwa 2 Minuten passierten. Es stellte sich eine Temperatur von 115 °C ein. Unmittelbar nach dem Ausgang der Entkobaltungszone wurde ein Emulsionsspalter als verdünnte Lösung so zugegeben, dass die Konzentration an Spalter 420 mg pro t Reaktionsaustrag betrug. Der Emulsionsspalter war ein mit Propylenoxid modifiziertes Polyethylenimin gemäß WO 98/12235.

Nach der Mischstrecke wurden in einer Beruhigungszone pro Stunde 260 kg Entspannungsgas abgetrennt und in ein Sammelsystem abgeleitet. Die Flüssigphasen wurden voneinander getrennt. Die wässrige Phase war weitgehend frei von organischen Anteilen, der Gehalt an Kobaltcarbonylen betrug nur 0,05 Gew.-%. Die organische Phase enthielt noch etwa 0,7 Gew.-% Fremdphase, der Gehalt an Kobalt betrug 10 ppm. Die weitere Aufarbeitung erfolgte wie in WO 98/12235 beschrieben.

Das eingesetzte Polyisobuten wurde zu 92 % umgesetzt. 90 % des umgesetzten Polyisobutens wurden in die Wertprodukte Polyisobutylaldehyd, -alkohol oder -ester umgewandelt. Die Ermittlung des Polyisobutenumsatzes sowie der Ausbeuten an Polyisobutenaldehyd, -alkohol oder -ester erfolgte säulenchromatographisch sowie durch Ermittlung von Kennzahlen.

Beispiel 3: Verwendung von wässrigen Kobaltcarbonyllösungen als Hydroformylierungskatalysator

Man führte dem oben beschriebenen Vorcarbonylierungsreaktor 208 kg/h wässrige saure Kobaltformiatlösung zu, deren pH-Wert mit Ameisensäure auf 3,4 eingestellt wurde und die 1,3 Gew.-% Kobalt enthielt. Die Umwandlung des Kobaltformiats in Kobaltcarbonyle erfolgte bei 95 °C mit einem Gasgemisch von 40 Vol.-% CO und 59 Vol.-% $H_2$ (+1 % Inertgase). Es wurde im Wesentlichen das gesamte zur Durchführung der Hydroformylierung notwendige Gas durch den Vorcarbonylierungsreaktor geleitet. Nach dem Durchgang durch den Vorcarbonylierungsreaktor hatten sich 70 % des angebotenen Kobalts in Kobaltcarbonylwasserstoff umgewandelt. Der Austrag des Vorcarbonylierungsreaktors wurde unmittelbar dem Hydroformylierungssystem zugeführt.

Außerdem leitete man stündlich 3660 kg einer Mischung aus 1940 kg Polyisobuten und 1720 kg einer $C_{10}$-$C_{14}$-Paraffinkohlenwasserstofffraktion in das Hydroformylierungsreaktionssystem. Das Reaktorsystem hatte ein Reaktionsvolumen von 21,7 m$^3$, so dass die Reaktionsraumbelastung 0,17 kg/l*h betrug.

Im Reaktionssystem fand bei 181 °C die Hydroformylierungsreaktion statt. Der Reaktionsdruck von 270 bar wurde durch Zufuhr der notwendigen Menge Synthesegas konstant gehalten. Am Boden des ersten Reaktors des Reaktionssystems wurden stündlich 185 kg einer an Kobaltcarbonylen verarmten wässrigen Lösung abgezogen und der Entkobaltungsstufe zugeführt.

Nach dem Passieren der Reaktionsstrecke wurde das Produkt in eine Entkobaltungszone entspannt. Der Druck wurde dabei von 270 auf 20 bar abgesenkt. In die Entkobaltungszone wurden pro Stunde außerdem 2300 kg Kobaltsalzlösung der oben genannten Zusammensetzung sowie 9,5 kg Luft geleitet, die vor dem Eintritt in die Entkobaltungszone in einer Zweistoffdüse intensiv gemischt wurden und danach eine Blasensäule mit einer mittleren Verweilzeit von etwa 2 Minuten passierten. Es stellte sich eine Temperatur von 115 °C ein. Unmittelbar nach dem Ausgang der Entkobaltungszone wurde ein Emulsionsspalter als verdünnte Lösung so zugegeben, dass die Konzentration an Spalter 420 mg pro t Reaktionsaustrag betrug. Der Emulsionsspalter war ein mit Propylenoxid modifiziertes Polyethylenimin gemäß WO 98/12235.

Nach der Mischstrecke wurden in einer Beruhigungszone pro Stunde 360 kg Entspannungsgas abgetrennt und in ein Sammelsystem abgeleitet. Die Flüssigphasen wurden voneinander getrennt. Die wässrige Phase war weitgehend frei von organischen Anteilen, der Gehalt an Kobaltcarbonylen betrug nur 0,05 Gew.-%. Die organische Phase enthielt noch etwa 0,7 Gew.-% Fremdphase, der Gehalt an Kobalt betrug 10 ppm. Die weitere Aufarbeitung erfolgte wie in WO 98/12235 beschrieben.

Das eingesetzte Polyisobuten wurde zu 88 % umgesetzt. 90 % des umgesetzten Polyisobutens wurden in die Wertprodukte Polyisobutylaldehyd, -alkohol oder -ester umgewandelt. Die Ermittlung des Polyisobutenumsatzes sowie der Ausbeuten an Polyisobutenaldehyd, -alkohol oder -ester erfolgte säulenchromatographisch sowie durch Ermittlung von Kennzahlen.

Die Ausbeute an dem gewünschten Polyisobutenaldehyd, -alkohol und -ester war nach den beiden erfindungsgemäßen Beispielen 2 und 3 unter Verwendung von außerhalb der Reaktionszone vorgebildetem Robaltcarbonyl wesentlich höher als nach dem Vergleichsbeispiel 1, bei welchem dem Reaktionssystem eine wässrige Kobaltformiatlösung zugeführt wurde und die Kobaltcarbonylbildung erst im Reaktionssystem erfolgte.

**Patentansprüche**

1. Verfahren zur kontinuierlichen Hydroformylierung von im Wesentlichen einfach ungesättigten Polyalkylenen mit 30 bis 700 Kohlenstoffatomen, bei dem man

   i) in Abwesenheit der Polyalkylene aus einem in einer wässrigen Phase gelösten Katalysatorvorläufer einen hydroformylierungsaktiven Kobaltcarbonylkatalysator herstellt,

   ii) in einer Reaktionszone die Polyalkylene in Gegenwart des Kobaltcarbonylkatalysators mit Synthesegas hydroformyliert,

   iii) aus dem Austrag aus der Reaktionszone den Kobaltcarbonylkatalysator unter zumindest teilweiser Rückbildung des Katalysatorvorläufers abtrennt und den Katalysatorvorläufer in Schritt i) zurückführt.

2. Verfahren nach Anspruch 1, bei dem man den Kobaltcarbonylkatalysator in einer die Polyalkylene enthaltenden organischen Phase löst und die mit dem Kobaltcarbonylkatalysator beladene organische Phase in die Reaktionszone einführt.

**3.** Verfahren nach Anspruch 2, bei dem man den Kobaltcarbonylkatalysator in der organischen Phase löst, indem man eine den Kobaltcarbonylkatalysator enthaltende wässrige Phase mit der organischen Phase in Kontakt bringt, wobei der Kobaltcarbonylkatalysator zumindest teilweise in die organische Phase extrahiert wird.

**4.** Verfahren nach Anspruch 2, bei dem man den Kobaltcarbonylkatalysator in der organischen Phase löst, indem man eine den Kobaltcarbonylkatalysator enthaltende wässrige Phase mit einem Strippgas behandelt und das mit dem Kobaltcarbonylkatalysator beladene Strippgas mit der organischen Phase in Kontakt bringt, wobei der Kobaltcarbonylkatalysator zumindest teilweise in der organischen Phase absorbiert wird.

**5.** Verfahren nach Anspruch 1, bei dem man in die Reaktionszone gleichzeitig eine den Kobaltcarbonylkatalysator enthaltende wässrige Phase und eine die Polyalkylene enthaltende organische Phase einführt.

**6.** Verfahren nach einem der vorhergehenden Ansprüche, bei dem es sich bei dem Katalysatorvorläufer um ein Kobalt(II)-salz handelt und man den Kobaltcarbonylkatalysator durch Behandeln des Katalysatorvorläufers mit Synthesegas herstellt.

**7.** Verfahren nach Anspruch 3 oder 5, bei dem man

a) eine wässrige Kobalt(II)-salzlösung unter Bildung eines Kobaltcarbonylkatalysators innig mit Synthesegas in Kontakt bringt,

b) die den Kobaltcarbonylkatalysator enthaltende wässrige Phase mit einer die Polyalkylene enthaltenden organischen Phase in Kontakt bringt, wobei der Kobaltcarbonylkatalysator zumindest teilweise in die organische Phase extrahiert wird,

c) die organische Phase mit Synthesegas in der Reaktionszone bei erhöhtem Druck und erhöhter Temperatur hydroformyliert,

d) den Austrag aus der Reaktionszone in Gegenwart von wässriger Kobalt(II)-salzlösung mit Sauerstoff behandelt, wobei der Kobaltcarbonylkatalysator unter Bildung von Kobalt(II)-salzen zersetzt wird und diese in die wässrige Phase zurückextrahiert werden, und

e) die wässrige Kobalt(II)-salzlösung in Schritt a) zurückführt.

**8.** Verfahren nach Anspruch 4, bei dem man

a) eine mit einem Kobaltcarbonylkatalysator beladene Polyalkylene enthaltende organische Phase mit Synthesegas in der Reaktionszone bei erhöhtem Druck und erhöhter Temperatur hydroformyliert,

b) den Austrag aus der Reaktionszone mit einer wässrigen Säure versetzt und in Gegenwart einer einen Kobaltcarbonylkatalysator enthaltenden wässrigen Phase mit einem Strippgas strippt, wobei der Kobaltcarbonylkatalysator zumindest teilweise vom Strippgas mitgeführt und teilweise in eine wasserlösliche Form überführt und in die wässrige Phase extrahiert wird,

c) die wässrige Phase mit Sauerstoff behandelt, wobei die wasserlösliche Form des Kobaltcarbonylkatalysators unter Bildung von Kobalt(II)-salzen zersetzt wird;

d) die wässrige Kobalt(II)-salzlösung unter Bildung eines Kobaltcarbonylkatalysators innig mit Synthesegas in Kontakt bringt und die den Kobaltcarbonylkatalysator enthaltende wässrige Phase in Schritt b) zurückführt,

e) das mit dem Kobaltcarbonylkatalysator beladene Strippgas aus Schritt b) mit einer Polyalkylene enthaltenden organischen Phase in Kontakt bringt, wobei der Kobaltcarbonylkatalysator zumindest teilweise in der organischen Phase absorbiert wird, und die organische Phase in den Schritt a) zurückführt.

**9.** Verfahren nach einem der Ansprüche 1 bis 5, bei dem es sich bei dem Katalysatorvorläufer um ein Salz des Kobalttetracarbonylanions handelt und man den Kobaltcarbonylkatalysator durch Ansäuern des Katalysatorvorläufers herstellt.

**10.** Verfahren nach Anspruch 3 oder 5, bei dem man

a) eine wässrige Lösung eines Salzes des Kobalttetracarbonylanions unter Bildung eines hydroformylierungsaktiven Kobaltcarbonylkatalysators ansäuert,

b) die den Kobaltcarbonylkatalysator enthaltende wässrige Lösung mit einer die Polyalkene enthaltenden organischen Phase innig in Kontakt bringt, wobei der Kobaltcarbonylkatalysator zumindest teilweise in die organische Phase extrahiert wird,

c) die organische Phase in der Reaktionszone hydroformyliert,

d) den Austrag aus der Reaktionszone unter Rückbildung des Kobalttretracarbonylanions mit einer wässrigen Lösung einer Base behandelt, und die wässrige Lösung in Schritt a) zurückführt.

11. Verfahren nach einem der vorhergehenden Ansprüche, **dadurch gekennzeichnet, dass** man die Hydroformylierung in wenigstens zwei aufeinanderfolgenden Reaktionszonen durchführt.

12. Verfahren nach einem der Ansprüche 2 bis 11, bei dem die organische Phase ein inertes Lösungsmittel enthält.

13. Verfahren nach einem der vorhergehenden Ansprüche, bei dem man als Polyalkylen Homo- oder Copolymere des Isobutens verwendet.

**Claims**

1. A process for the continuous hydroformylation of essentially monounsaturated polyalkylenes having from 30 to 700 carbon atoms, in which

    i) a hydroformylation-active cobalt carbonyl catalyst is prepared from a catalyst precursor dissolved in an aqueous phase in the absence of the polyalkylenes,

    ii) the polyalkylenes are hydroformylated by means of synthesis gas in the presence of the cobalt carbonyl catalyst in a reaction zone,

    iii) the cobalt carbonyl catalyst is separated from the output from the reaction zone with at least partial reformation of the catalyst precursor and the catalyst precursor is recirculated to step i).

2. A process as claimed in claim 1 in which the cobalt carbonyl catalyst is dissolved in an organic phase comprising the polyalkylenes and the organic phase laden with the cobalt carbonyl catalyst is introduced into the reaction zone.

3. A process as claimed in claim 2 in which the cobalt carbonyl catalyst is dissolved in the organic phase by bringing an aqueous phase comprising the cobalt carbonyl catalyst into contact with the organic phase, with the cobalt carbonyl catalyst being at least partly extracted into the organic phase.

4. A process as claimed in claim 2 in which the cobalt carbonyl catalyst is dissolved in the organic phase by treating an aqueous phase comprising the cobalt carbonyl catalyst with a stripping gas and bringing the stripping gas laden with the cobalt carbonyl catalyst into contact with the organic phase, with the cobalt carbonyl catalyst being at least partly absorbed in the organic phase.

5. A process as claimed in claim 1 in which an aqueous phase comprising the cobalt carbonyl catalyst and an organic phase comprising the polyalkylenes are introduced simultaneously into the reaction zone.

6. A process as claimed in any of the preceding claims in which the catalyst precursor is a cobalt(II) salt and the cobalt carbonyl catalyst is prepared by treating the catalyst precursor with synthesis gas.

7. A process as claimed in claim 3 or 5 in which

    a) an aqueous cobalt(II) salt solution is brought into intimate contact with synthesis gas to form a cobalt carbonyl catalyst,

    b) the aqueous phase comprising the cobalt carbonyl catalyst is brought into contact with an organic phase comprising the polyalkylenes, with the cobalt carbonyl catalyst being at least partly extracted into the organic phase,

    c) the organic phase is hydroformylated by means of synthesis gas at superatmospheric pressure and elevated temperature in the reaction zone,

    d) the output from the reaction zone is treated with oxygen in the presence of aqueous cobalt (II) salt solution, with the cobalt carbonyl catalyst being decomposed to form cobalt(II) salts and the latter being back-extracted into the aqueous phase, and

    e) the aqueous cobalt(II) salt solution is recirculated to step a).

8. A process as claimed in claim 4 in which

    a) a polyalkylene-containing organic phase laden with a cobalt carbonyl catalyst is hydroformylated by means of synthesis gas at superatmospheric pressure and elevated temperature in the reaction zone,

    b) the output from the reaction zone is admixed with an aqueous acid and stripped by means of a stripping gas in the presence of an aqueous phase comprising a cobalt carbonyl catalyst, with the cobalt carbonyl catalyst being at least partly entrained by the stripping gas and partly converted into a water-soluble form and extracted into the aqueous phase,

    c) the aqueous phase is treated with oxygen, with the water-soluble form of the cobalt carbonyl catalyst being decomposed to form cobalt (II) salts,

    d) the aqueous cobalt(II) salt solution is brought into intimate contact with synthesis gas to form a cobalt carbonyl catalyst and the aqueous phase comprising the cobalt carbonyl catalyst is recirculated to step b),

    e) the stripping gas laden with the cobalt carbonyl catalyst from step b) is brought into contact with a polyalkylene-containing organic phase, with the cobalt carbonyl catalyst being at least partly absorbed in the organic phase, and the organic phase is recirculated to step a).

**9.** A process as claimed in any of claims 1 to 5 in which the catalyst precursor is a salt of the cobalt tetracarbonyl anion and the cobalt carbonyl catalyst is prepared by acidification of the catalyst precursor.

**10.** A process as claimed in claim 3 or 5 in which

    a) an aqueous solution of a salt of the cobalt tetracarbonyl anion is acidified to form a hydroformylation-active cobalt carbonyl catalyst,

    b) the aqueous solution comprising the cobalt carbonyl catalyst is brought into intimate contact with an organic phase comprising the polyalkenes, with the cobalt carbonyl catalyst being at least partly extracted into the organic phase,

    c) the organic phase is hydroformylated in the reaction zone,

    d) the output from the reaction zone is treated with an aqueous solution of a base to reform the cobalt tetracarbonyl anion, and the aqueous solution is recirculated to step a).

**11.** A process as claimed in any of the preceding claims, wherein the hydroformylation is carried out in at least two successive reaction zones.

**12.** A process as claimed in any of claims 2 to 11 in which the organic phase comprises an inert solvent.

**13.** A process as claimed in any of the preceding claims in which homopolymers or copolymers of isobutene are used as polyalkylene.

**Revendications**

**1.** Procédé d'hydroformylation continue de polyalkylènes insaturés essentiellement simples, avec 30 à 700 atomes de carbone, dans lequel

    i) on prépare un catalyseur d'hydroformylation au cobalt-carbonyle en absence du polyalkylène, à partir d'un précurseur du catalyseur dissous dans une phase aqueuse,
    ii) dans une zone de réaction, le polyalkylène est hydroformylé en présence du catalyseur au cobalt-carbonyle avec un gaz de synthèse,
    iii) depuis la décharge de la zone de réaction, on sépare le catalyseur au cobalt-carbonyle avec récupération au moins partielle du précurseur du catalyseur et le précurseur du catalyseur est ramené à l'étape i).

**2.** Procédé selon la revendication 1, dans lequel on dissout le catalyseur au cobalt carbonyle dans une phase organique contenant le polyalkylène et la phase organique chargée du catalyseur au cobalt-carbonyle est conduite dans la zone de réaction.

**3.** Procédé selon la revendication 2, dans lequel on dissout le catalyseur au cobalt carbonyle dans la phase organique, en ce que l'on met en contact une phase aqueuse contenant le catalyseur au cobalt-carbonyle avec la phase organique, où le catalyseur au cobalt-carbonyle est au moins partiellement extrait dans la phase organique.

**4.** Procédé selon la revendication 2, dans lequel on dissout le catalyseur au cobalt carbonyle dans la phase organique, en ce que l'on traite une phase aqueuse contenant le catalyseur au cobalt-carbonyle avec un gaz de strippage et en ce que le gaz de strippage chargé du catalyseur au cobalt carbonyle est mis en contact avec une phase organique, où le catalyseur au cobalt-carbonyle est au moins partiellement absorbé dans la phase organique.

**5.** Procédé selon la revendication 1, dans lequel on conduit dans la zone de réaction, simultanément une phase aqueuse contenant le catalyseur au cobalt carbonyle et une phase organique contenant le polyalkylène.

**6.** Procédé selon une des revendications précédentes, dans lequel le précurseur du catalyseur consiste en un sel de cobalt (II) et on prépare le catalyseur au cobalt-carbonyle par traitement du précurseur du catalyseur avec un gaz de synthèse.

**7.** Procédé selon la revendication 3 ou 5, dans lequel :

    a) on met en contact intime une solution aqueuse d'un sel de cobalt (II) avec un gaz de synthèse, pour former un catalyseur au cobalt-carbonyle,

b) la phase aqueuse contenant le catalyseur au cobalt-carbonyle est mise en contact avec une phase organique contenant le polyalkylène, où le catalyseur au cobalt-carbonyle est au moins partiellement extrait dans la phase organique,

c) la phase organique est hydroformylée avec du gaz de synthèse dans la zone de réaction, sous pression élevée et température élevée,

d) la décharge de la zone de réaction est traitée avec de l'oxygène en présence d'une solution aqueuse d'un sel de cobalt (II), où le catalyseur au cobalt-carbonyle est décomposé par formation de sels de cobalt (II) et ceux-ci sont extrait dans la phase aqueuse, et

e) la solution aqueuse de sel de cobalt (II) est ramenée à l'étape a).

**8.** Procédé selon la revendication 4, dans lequel :

a) une phase organique contenant le polyalkylène, chargée du catalyseur au cobalt-carbonyle est hydroformylée avec du gaz de synthèse dans la zone de réaction, sous pression élevée et température élevée,

b) la décharge de la zone de réaction est traitée avec un acide aqueux et traitée avec un gaz de strippage en présence d'une phase aqueuse contenant le catalyseur au cobalt-carbonyle, où le catalyseur au cobalt-carbonyle est au moins partiellement entraîné par le gaz de strippage et convertit partiellement en une forme soluble dans l'eau et extrait dans la phase aqueuse,

c) la phase aqueuse est traitée avec de l'oxygène où la forme soluble dans l'eau du catalyseur au cobalt-carbonyle est décomposée avec formation de sels de cobalt (II) ;

d) la solution aqueuse de sel de cobalt (II) est mise en contact intime avec un gaz de synthèse pour former un catalyseur au cobalt-carbonyle et la phase aqueuse contenant le catalyseur au cobalt-carbonyle est ramenée à l'étape b),

e) le gaz de strippage chargé du catalyseur au cobalt-carbonyle de l'étape b) est mis en contact avec une phase organique contenant le polyalylène, où le catalyseur au cobalt-carbonyle est au moins partiellement absorbé dans la phase organique, et la phase organique est ramenée à l'étape a).

**9.** Procédé selon l'une des revendications 1 à 5, dans lequel le précurseur du catalyseur consiste en un sel de l'anion cobalt-tétracarbonyle et l'on prépare le catalyseur au cobalt-carbonyle par acidification du précurseur de catalyseur.

**10.** Procédé selon la revendication 3 ou 5, dans lequel :

a) on acidifie une solution aqueuse d'un sel de l'anion cobalt-tétracarbonyle avec formation d'un catalyseur au cobalt-carbonyle, actif pour l'hydroformylation,

b) la phase aqueuse contenant le catalyseur au cobalt-carbonyle est mise en contact intime avec une phase organique contenant le polyalkylène, où le catalyseur au cobalt-carbonyle est au moins partiellement extrait dans la phase organique,

c) la phase organique est hydroformylée dans la zone de réaction,

d) la décharge de la zone de réaction est traitée avec une solution aqueuse d'une base avec régénération de l'anion cobalt-tétracarbonyle, et la solution aqueuse est ramenée à l'étape a).

**11.** Procédé selon l'une des revendications précédentes, **caractérisé en ce que** l'on réalise l'hydroformylation dans au moins deux zones de réactions successives.

**12.** Procédé selon l'une des revendications 2 à 11, dans lequel la phase organique contient un solvant inerte.

**13.** Procédé selon l'une des revendications précédentes, dans lequel on utilise comme polyalkylène, un homo- ou copolymère de l'isobutène.

Fig. 2

Fig. 3